(19)

**Europäisches Patentamt**
**European Patent Office**
**Office européen des brevets**

(11) **EP 4 672 034 A1**

(12) **EUROPEAN PATENT APPLICATION**

(43) Date of publication:
    **31.12.2025 Bulletin 2026/01**

(21) Application number: **24184752.4**

(22) Date of filing: **26.06.2024**

(51) International Patent Classification (IPC):
    **G06F 16/906** (2019.01)     **G06N 3/045** (2023.01)
    **G06N 3/048** (2023.01)     **G06N 3/084** (2023.01)
    **G06N 3/09** (2023.01)

(52) Cooperative Patent Classification (CPC):
    **G06N 3/045; G06F 16/906; G06N 3/048;**
    **G06N 3/084; G06N 3/09**

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(71) Applicant: **NXP B.V.**
    **5656 AG Eindhoven (NL)**

(72) Inventors:
    • **Alkanat, Tunc**
      **5656 AG Eindhoven (NL)**
    • **Pandharipande, Ashish**
      **5656 AG Eindhoven (NL)**
    • **Fatseas, Konstantinos**
      **5656 AG Eindhoven (NL)**
    • **Sanberg, Willem Pieter**
      **5656 AG Eindhoven (NL)**
    • **Daalderop, Gerardus Henricus Otto**
      **5656 AG Eindhoven (NL)**

(74) Representative: **Hardingham, Christopher Mark**
    **NXP Semiconductors**
    **Intellectual Property Group**
    **The Cattle Barn**
    **Upper Ashfield Farm, Hoe Lane**
    **Romsey, Hampshire S051 9NJ (GB)**

Remarks:
    Amended claims in accordance with Rule 137(2)
    EPC.

(54) **MULTI-TASK ACTIVE DETECTION SYSTEM**

(57) A computer-implemented method (200) for classifying points in a point cloud (220) obtained by an active detection and ranging system is provided. The method comprises: computing a latent representation of the point cloud, determining from the latent representation, for each point in the point cloud, a probability that the point represents an object belonging to one or more object classes, and determining from the latent representation, for each point in the point cloud, a probability the point represents a ghost object. An object classification network (203) is used for determining the probability that the point represents an object, and a ghost classification network (205) is used for determining the probability the point represents a ghost object.

FIGURE 2

**Description**

**TECHNICAL FIELD**

The present disclosure relates generally to a computer implemented method of classifying objects detected by an active detection and ranging system, methods for training machine learning models for object classification and to corresponding systems.

**BACKGROUND**

In active detection and ranging systems such as radar, lidar, and sonar, a transmitted signal is emitted from the active detection and ranging system, the transmitted signal then reflects from an object in proximity to the system. The reflected signal returns to and is detected by the system as a return signal, thereby detecting the object from which the transmitted signal was reflected. The return signal can contain information about the detected object such as the distance from the system, the relative velocity, the location, and the radar cross-section.

A common artefact that arises in active detection and ranging systems is that of a ghost object. When the transmitted signal is emitted (e.g. an electromagnetic pulse or sonic pulse), the returning signal can reflect from a secondary object (such as barriers on the side of a road) before returning to the active imaging system. This causes the system to detect a ghost object that is collinear with the reflected signal when there is no real object there.

This poses a particular issue when using radar for object detection and classification in the context of advanced driver-assistance systems (ADAS). An ADAS will attempt to classify objects and then provide a course of action to the vehicle, such as steering or braking. Therefore, if the ADAS detects a ghost pedestrian on the road, it may provide an undesirable and/or dangerous course of action such as suddenly braking.

Therefore, there is a need to provide a system for determining if an object is a ghost object. It is known to use machine learning to classify points in a point cloud as ghost objects or real objects, however the classification is not perfect. Similarly, it is known to classify points in a point cloud as pertaining to objects of various classes.

**STATEMENTS OF INVENTION**

According to a first aspect of the invention, there is provided a computer-implemented method for classifying points in a point cloud obtained by an active detection and ranging system. The method comprising:

computing a latent representation of the point cloud, wherein computing the latent representation comprises providing the point cloud to an encoder network;
determining, for at least one point point in the point cloud, a probability that the at least one point represents an object belonging to one or more object classes by providing the latent representation to an object classification network that has been trained to classify points as representing an object belonging to the one or more object classes; and
determining, for the at least one point in the point cloud, a probability the at least one point represents a ghost object by providing the latent representation of the point cloud to a ghost classification network that has been trained to classify points as representing a ghost object.

The term "active detection and ranging system" may mean any system which emits a signal and detects a reflection of that signal. The term "active detection and ranging system" includes radar, lidar, and/or sonar. An active detection and ranging system may alternatively be referred to as an active imaging system. In some embodiments, the invention may be implemented using a radar system in a vehicle. In other embodiments, the invention may be implemented in a robotics system. A latent representation of the point cloud may be an embedding of the point cloud into a lower dimensional space. A ghost object may be an object detected by the active detection and ranging system for which a detected location does not correspond to a location of a physical object. A ghost object may be an object detected whereby the reflected signal reflects from at least one secondary object before returning to the active detection and ranging system. "At least one point" may mean at least 50% of the points in the point cloud, preferably "at least one point" may mean all of the points in the point cloud.

The point cloud may comprise a time-series point cloud. A time-series point cloud may be a plurality of point clouds, obtained at different times (e.g. sequentially). When the point cloud is a time-series point cloud, computing a latent representation of the point cloud may further comprise providing an output of the encoder network to a sequence network. The sequence network may be an LSTM, GRU, ESN, or any type of suitable recurrent neural network.

The encoder network may comprise: at least one sampling layer for choosing a subset of the point cloud; at least one grouping layer for constructing groups of the points in the point cloud according to the subset of the point cloud; and at least one neural network layer for down-sampling the groups of points in the point cloud. The sampling layer may apply iterative farthest point sampling; random sampling; and/or inverse density importance sampling. The grouping layer may construct groups using k-Nearest Neighbours, ball query, or any other appropriate nearest neighbour search. Constructing groups of the points in the point cloud according to the subset of the point cloud may mean the subset of the point cloud is used as a seed for the grouping layer. The encoder network may comprise repeated blocks of a sampling layer, a grouping layer, and a neural network layer.

The object classification network may comprise an interpolation layer for up-sampling points into groups of points; and a normalisation layer (e.g. softmax) for classifying each point. The interpolation layer may use a skip connection from the encoder network to up-sample points into groups of points. The interpolation layer may further assign a feature vector to each of the groups of points. The interpolation layer may assign a feature vector to each of the groups of points by using an inverse distance weighted average based on a plurality of nearest neighbours. Any appropriate interpolation method is equally envisaged. The interpolation layer may comprise at least one layer of a neural network. The normalisation layer of the object classification network may classify each point into one a plurality of categories. The categories may comprise: "Background", "Pedestrian", "Bicycle", "Car", "Bus", "Truck", "Motorbike", "Bridges", "Vegetation", and/or "Railing". The skilled person will realise that any appropriate categories of objects may be selected. Classifying a point may comprise computing a probability that said point falls within each of the plurality of classes.

In some embodiments, the vehicle may be a road-based vehicle, such as a car, a truck, or a bus. In alternative embodiments, the vehicle may be an unmanned aerial vehicle and the categories may further include other aerial vehicles. In some embodiments, the method may equally apply to autonomous mobile robots; inventory management systems; robotic arms; or other robotic systems where the vehicle is stationary. In such embodiments, instead of an ADAS, it may be desirable to control a robotic arm or other such features of a robot and classify objects such as inventory or objects on a conveyer belt.

The ghost classification network may comprise at least one interpolation layer for up-sampling points into groups of points; and a normalisation layer (e.g. softmax) for classifying the at least one point. The interpolation layer may use a skip connection from the encoder network to up-sample points into groups of points. The interpolation layer may further assign a feature vector to each of the groups of points. The interpolation layer may assign a feature vector to each of the groups of points by using an inverse distance weighted average based on a plurality of nearest neighbours. Any appropriate interpolation method is equally envisaged. The interpolation layer may comprise one or more layers of a neural network. The normalisation layer of the ghost classification network may classify each point as either belonging to a ghost object or not belonging to a ghost object.

In some embodiments, prior to the normalisation layer, the object classification network and ghost classification layer may have different architectures. In alternative embodiments, prior to the normalisation layer, the object classification network and ghost classification network have the same architecture.

The input to the normalisation layer of either the object classification network or the ghost classification network may be a point cloud that has the same spatial structure as the point cloud obtained by the active detection and ranging system.

According to a second aspect of the invention, there is provided a method for training a machine learning model for classifying at least one point in a point cloud obtained by an active detection and ranging system. The method comprises:

a) computing a latent representation of a point cloud, wherein computing the latent representation comprises providing the point cloud to an encoder network;
b) determining, for the at least one point in the point cloud, a probability that the at least one point represents an object belonging to one or more object classes by providing the latent representation to an object classification network; and
c) determining, for the at least one point in the point cloud, a probability the at least one point represents a ghost object by providing the latent representation of the point cloud to a ghost classification network;
d) computing a first loss by comparing the probability the at least one point represents an object belonging to a specific class with a known object classification;
e) computing a second loss by comparing the probability the at least one point represents a ghost object with a known ghost classification;
f) computing a global loss by combining the first and second loss;
g) backpropagating the global loss through at least one of the encoder network, object classification network, and ghost classification network to determine updated model parameters of the object classification network and the ghost classification network.

Backpropagating the global loss through at least one of the encoder network, object classification network, and ghost classification network may comprise computing updated parameters of the networks based on the global loss in order to attempt to minimise the global loss. Backpropagation may be done via any suitable gradient descent or stochastic gradient descent method.

The training method may further comprise:

h) repeating a) to g) using a plurality of point clouds and associated known object and ghost classifications until a predetermined criterion is met.

The predetermined criterion may be a performance metric reaching a predetermined threshold. A performance metric may comprise at least one of: classification accuracy, precision, recall, and/or F1-score. The predetermined criterion may be the global loss reaching a predetermined threshold. Any suitable stopping criterion is equally envisaged.

The first loss may be a cross-entropy loss. The second loss may be a binary cross-entropy loss. The global loss may be a linear combination of the first loss and second loss.

According to a third aspect of the invention, there is provided a system comprising one or more processors. The system is configured to perform the steps of:

computing a latent representation of a point cloud obtained by an active detection and ranging system, wherein computing the latent representation comprises providing the point cloud to an encoder network;

determining, for at least one point in the point cloud, a probability that the at least one point represents an object belonging to one or more object classes by providing the latent representation to an object classification network that has been trained to classify points as representing an object belonging to the one or more object classes; and

determining, for the at least one point in the point cloud, a probability the at least one point represents a ghost object by providing the latent representation of the point cloud to a ghost classification network that has been trained to classify points as representing a ghost object.

According to a fourth aspect of the invention, there is provided a vehicle. The vehicle comprises an active detection and ranging system and a system according to the third aspect of the invention. The active detection and ranging system may be configured to emit and receive a signal, thereby generating a point cloud of an area proximal to the vehicle. The system according to the third aspect may be further configured to receive the point cloud.

The active detection and ranging system may be a radar system. Alternatively, the active detection and ranging system may be a lidar and/or sonar system. The signal may comprise an electromagnetic wave, such as a radio wave or a laser. Alternatively, the signal may comprise a sound wave.

The point cloud may contain information pertaining to the distance, azimuth, elevation, radial velocity, radar cross section, and/or Doppler features of objects in the area proximal to the vehicle.

The vehicle may further comprise an advanced driver assistance system (ADAS). The ADAS may receive data from the system according to the third aspect. In response to receiving data from the system according to the third aspect, the ADAS may apply an action to the vehicle. The action may be at least one of: braking, accelerating, steering, changing gear, and/or raising an alarm.

According to a fifth aspect of the invention, there is provided a non-transient machine readable medium comprising instructions for configuring one or more processors to perform the method according to the first or second aspects.

According to a sixth aspect there is provided a computer program comprising instructions to cause a computer processor to perform the method according to the first or second aspects.

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a non-transitory computer readable medium, which may be a physical computer readable medium, such as a disc or a memory device, or may be embodied as a transient signal. Such a transient signal may be a network download, including an internet download.

These and other aspects of the invention will be apparent from, and elucidated with reference to, the embodiments described hereinafter.

**BRIEF DESCRIPTION OF FIGURES**

Embodiments will be described, by way of example only, with reference to the drawings, in which:

Figure 1 is a diagram illustrating a vehicle equipped with a radar system and ADAS on a road;

Figure 2 is a flow diagram illustrating an example method of classifying points in a point cloud.

Figure 3 is a flow diagram illustrating an example method of encoding a point cloud.

Figure 4 is a flow diagram illustrating an example method of decoding an encoded point cloud into object class probabilities.

Figure 5 is a flow diagram illustrating an example method of decoding an encoded point cloud into ghost class probabilities.

Figure 6 is a flow diagram illustrating an example method of classifying points in a time-series point cloud.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments.

## DETAILED DESCRIPTION

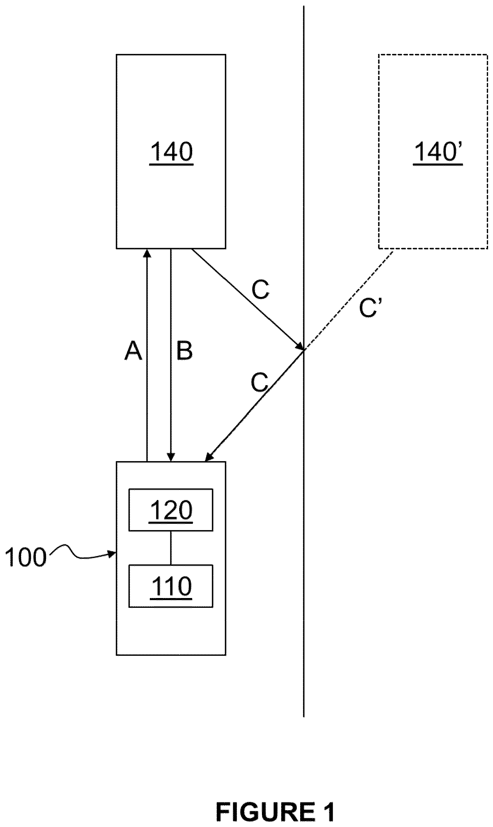

The problem of detecting ghost objects in the context of an advanced driver-assistance system, ADAS, will be described, by way of example, with reference to Figure 1. Whilst specific embodiments relating to detecting ghost objects as part of an advanced driver-assistance system in a vehicle equipped with radar, the present invention is not limited to such. The present invention may be incorporated into other systems that include any active detection and ranging systems, such as robotics.

Figure 1 shows a vehicle 100 equipped with a radar system 120 and ADAS 110. The radar system 120 preferably includes an integrated 77 GHz RFCMOS transceiver (but any suitable radar system 120 may be used). In use, the radar system 120 will emit an electromagnetic (EM) wave along path A. The EM wave will reflect from an object 140, such as another vehicle. In some instances, the reflected EM wave will travel directly back to the radar system 120 along path B. In other instances, the reflected EM wave will reflect from a secondary object 160, for example a road barrier, and return to the radar system 120 along path C. If the EM wave returns to the radar system 120 along path C, the radar system 120 may compute that there is an object, called a ghost object 140', collinear with the incoming EM wave along path C'. The ghost object 140' is correlated with the object 140 but does not exist. An ADAS 110 may determine that there is a ghost object 140' and take corrective action that is not necessary.

Through repeated sampling, the radar system 120 will accumulate a plurality of return signals and store them as data points in a point cloud. Each data point has information associated with it, such as range, distance, azimuth, elevation, radial velocity, radar cross section, and Doppler features of the object 140 or ghost object 140'. This information is stored as a feature vector in a point cloud.

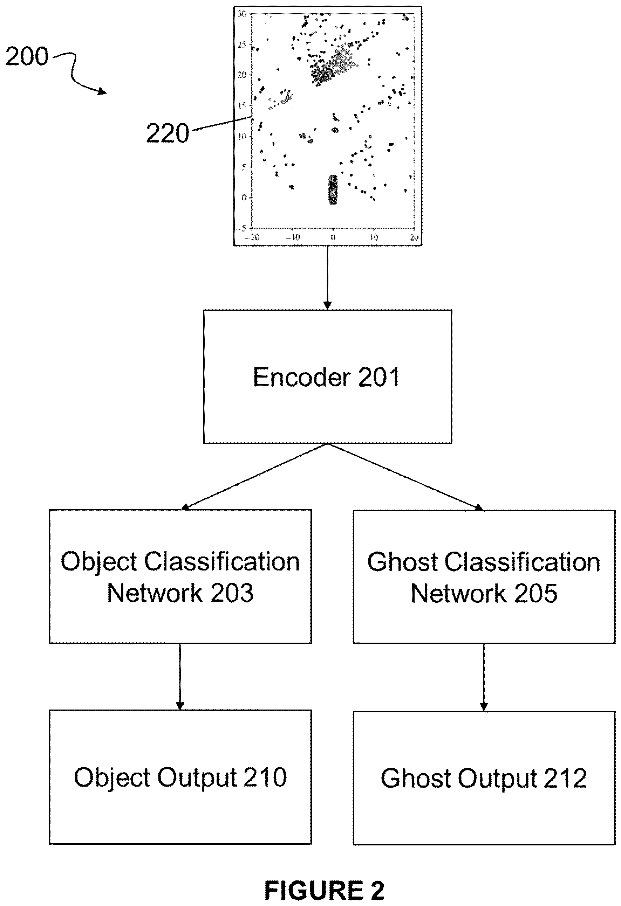

Turning to Figure 2, there is shown a flow diagram illustrating an example method of classifying points in a point cloud according to the present disclosure. There is provided a machine learning model 200 for classifying points in a point cloud 220. The machine learning model 200 comprises an encoder network 201, an object classification network 203, and a ghost classification network 205.

The machine learning model 200 receives a point cloud 220 as input at the encoder 201. The point cloud 220 consists of a plurality of data points. As described above, the data points have associated feature vectors. The point cloud 220 may be represented as a $n \times m$ matrix, where n is the number of data points in the point cloud 220 and m is the number of features in the feature vector associated with each data point.

The encoder 201 computes a latent representation of the point cloud. The latent representation is then input into the object classification network 203 and the ghost classification network 205.

The object classification network 203 outputs an object output 210. In some embodiments, the object output 210 is an $n \times k$ matrix, where n is the number of data points in the point cloud and k is the number of object classes the machine learning model 200 is trained to classify. In some embodiments, there are 4 object classes consisting of: background, pedestrian, bicycle, and car. Other object classes are equally envisaged, and the 4 object classes presently listed are not limiting. In this embodiment, each of the n rows of the object output 210 correspond to each of the n data points in the point cloud 220. Each of the k columns correspond to one of the object classes. An entry in the i-th row and j-th column indicates the probability that the i-th data point was obtained by the EM wave reflecting from an object belonging to the j-th object class.

The ghost classification network 205 outputs a ghost output 212. In some embodiments, the ghost output 212 is an n dimensional vector. The i-th entry in the ghost output 212 corresponds to the probability that the i-th data point corresponds to a ghost object C'.

In order to train the machine learning model 200, a dataset containing a plurality of point clouds where the correct classification for each point in the plurality of point clouds is known is obtained (e.g. by experiment or by simulation). The machine learning model 200 processes each point cloud and compares the output classifications with the known classifications. The machine learning model 200 then computes a multi-task loss which is a linear combination of a cross-entropy loss for the object classification and a binary cross-entropy loss for the ghost classification.

$$\mathcal{L} = \mathcal{L}_{obj} + \lambda\mathcal{L}_{ghost}$$

$$= -\frac{1}{N}\sum_{i=1}^{N} y_i \log(\hat{y}_i) - \frac{\lambda}{N}\sum_{i=1}^{N}\left(y_i' log(\widehat{y_i'}) + (1 - y_i') log(1 - \widehat{y_i'})\right)$$

Where N is the number of data points in the point cloud, $y_i$ is the ground truth object label, $y_i'$ is the ground truth ghost classification, $\hat{y}_i$ is the predicted object label, $\widehat{y_i'}$ is the predicted ghost label, and $\lambda$ is a weighting hyperparameter. The machine learning model is trained by minimising the multi-task loss function defined above using any appropriate training and optimising method such as AdaGrad, RMSProp, or ADAM. The skilled person will understand that any training and optimisation algorithm using the above-defined multi-task loss function may be appropriate.

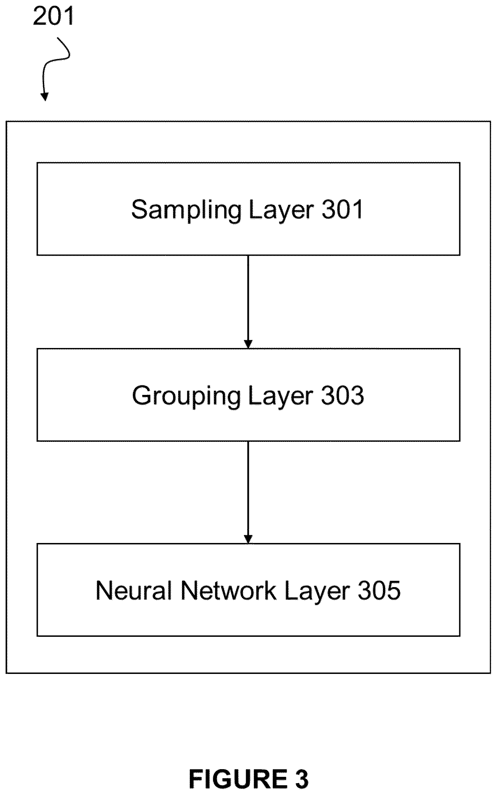

Turning to Figure 3, there is shown a flow diagram of the encoder 201. The encoder 201 comprises a sampling layer 301, a grouping layer 303, and a neural network layer 305. In some embodiments, a stack comprising sampling layer 301, grouping layer 303, and neural network layer 305 is repeated at least once.

The sampling layer 301 applies iterative farthest point sampling to choose a subset of the point cloud 220. Using the subset of the point cloud 220 as centroids, the grouping layer 303 groups the point cloud using ball query. In alternative embodiments, the point cloud is grouped using k-NN. The neural network layer 305 abstracts the groups computed in the grouping layer 303 and applies a neural network to further downsize the point cloud. Of the encoder, the neural network layer 305 is the only layer that has parameters that can be trained. The sampling layer 301 and grouping layer 303 are both unsupervised layers.

Whilst the encoder 201 has been described with specific reference to a sampling layer 301, grouping layer 303, and neural network layer 305, any supervised, unsupervised, or combination thereof learning method that embeds point clouds into a latent representation space may be used.

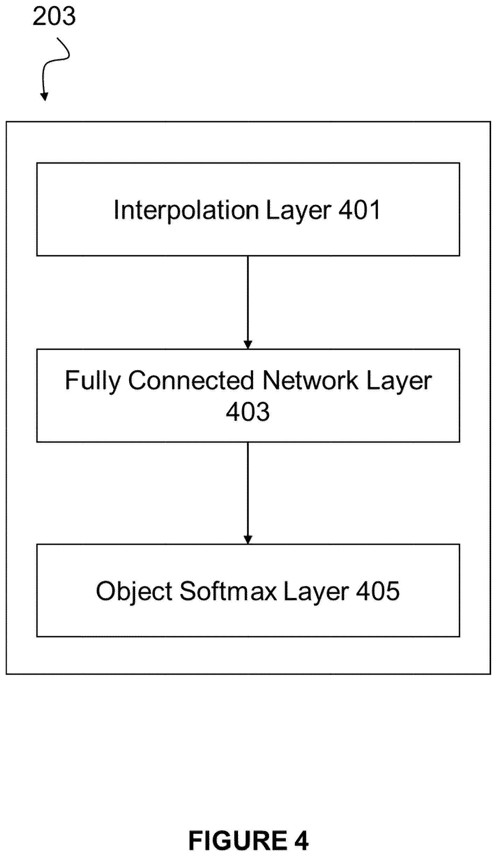

Turning to Figure 4, there is shown a flow diagram of the object classification network 203. The object classification network 203 comprises an interpolation layer 401 and a fully connected network layer 403.

The interpolation layer 401 up-samples the input using a skip connection (not shown) from the encoder 201 that contains spatial information of the point cloud. In some embodiments, the interpolation layer 401 constructs groups of data points from a centroid using a skip connection from the encoder 201. The interpolation layer 401 then applies an interpolation function based on the inverse distance weighted average to assign values to the data points within the group. The fully connected network layer 403 applies a plurality of fully connected neural network layers with ReLU activation. The stack of interpolation and fully connected network layers 401, 403 is repeated as often as necessary based on the encoder such that the output of the object classification network 203 has the same spatial structure as the point cloud 220.

The last layer in the object classification network is an object normalisation layer 405, in this example a softmax layer 405. The object softmax converts the output of the final fully connected network layer 403 into a probability that each data point in the point cloud 220 belongs to an object of a certain category.

Whilst the object classification network 203 has been described with specific reference to an interpolation layer and a fully connected network layer 401, 403, the skilled person will understand that any machine learning model that embeds point clouds into a latent representation space that is trained by a supervised, unsupervised, or combination thereof learning method may be appropriate.

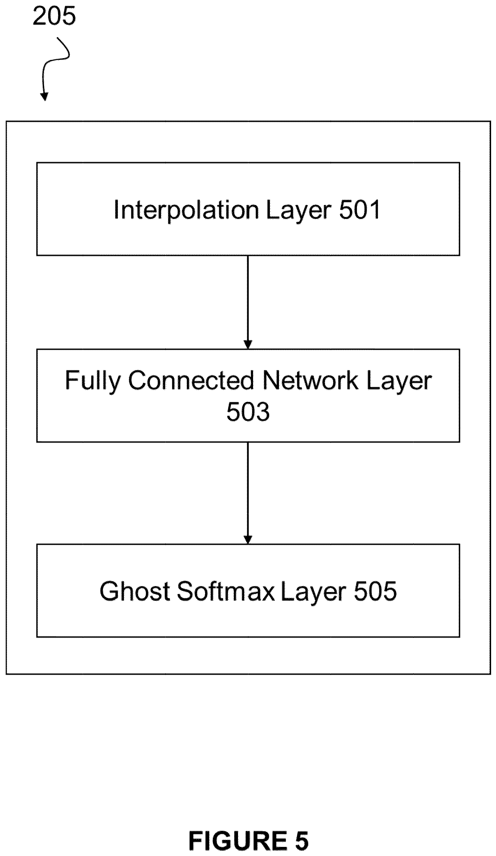

Turning to Figure 5, there is shown a flow diagram of the ghost classification network 205. In the present embodiment, the architecture of the ghost classification network 205 is nearly identical to that of the object classification network 203. The ghost classification network has an interpolation layer 501, a fully connected network layer 503, and a softmax layer 505. The only difference being that the softmax layer 505 outputs a single probability for each point, that is whether the point is that obtained from a ghost object. In alternative embodiments, the ghost classification network has a different architecture to that of the object classification network. All aspects described in respect to the object classification network 203 apply equally to the ghost classification network 205.

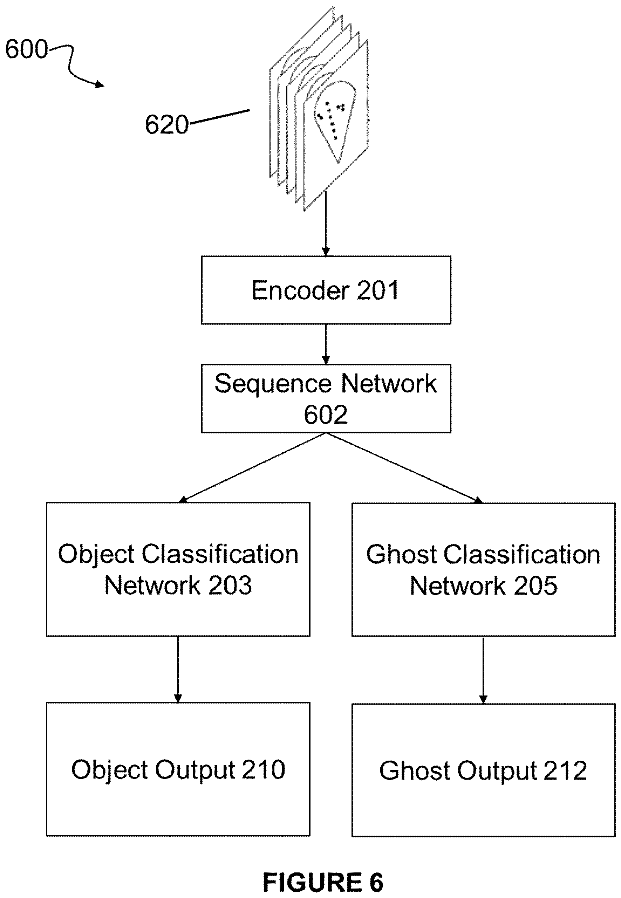

Turning to Figure 6, there is shown an alternative embodiment of the present disclosure configured to process a time-series point cloud. In this alternative embodiment, there is provided a machine learning model 600 configured to receive a time-series point cloud 620. The time-series point cloud 620 is composed of sequentially obtained point clouds 220.

The machine learning model 600 is formed from an encoder 201, a sequence network 602, an object classification network 203, and a ghost classification network 205. The encoder 201, object classification network

203, and ghost classification network 205 are as described above. The time-series point cloud 620 is processed by the encoder network 201 by passing each point cloud 220 through the encoder 201 independently. The output of the encoder 201 is a time-series of latent representations of the point clouds. This is input into the sequence network 602 which computes a latent representation of the entire time-series point cloud 620. In some embodiments, the sequence network 602 is an RNN, for example an LSTM or GRU. The skilled person will recognise that any appropriate network which is configured to process a sequence, such as a time-series, can be used for the sequence network 602.

After the sequence network 602 computes the latent representation of the time-series point cloud 620, the remainder of the computation is performed as previously described and shall not be reiterated here.

Due to the architecture of the machine learning model 200, that is having a shared encoder 201 and then separate branches for object classification network 203 and ghost classification network 205, embodiments of the machine learning model may achieve greater global classification accuracy over the 4 object classes and 1 ghost class (that the network was trained on) when compared to prior art models.

|  | 'Background' class accuracy | 'Pedestrian' class accuracy | 'Bicycle' class accuracy | 'Car' class accuracy | 'Ghost' class accuracy |
|---|---|---|---|---|---|
| Reference Model (1) | 0.981 | 0.96 | 0.857 | 0.266 | - |
| Reference Model (2) | 0.991 | 0.761 | 0.792 | 0.318 | 0.929 |
| Proposed Model | 0.988 | 0.945 | 0.856 | 0.624 | 0.974 |
| Difference (1) in % | +0.7 | -1.5 | -0.1 | +35.8 | - |
| Difference (2) in % | -0.3 | +18.4 | +6.4 | +30.6 | +4.5 |

The above table compares classification accuracies for each of the four object classes and the ghost class for reference models (1) and (2) and an example model according to the present disclosure.

Reference models (1) and (2) are described in Qi *et al.*, 2017 and are adapted for the 4-object class detection problem and the 4-object class and 1-ghost task detection problem respectively.

By treating the problem of class detection and ghost detection using a shared encoder and separate ghost and object classification networks, there is a significant improvement in overall accuracy, namely with a 35.8% improvement in car classification and a 66.2% improvement in ghost classification. There are slight deteriorations in pedestrian and bicycle classification, but this is largely outweighed by the improvements in the other classes.

Furthermore, by providing a shared encoder, there is a decrease in storage space and memory requirements for processing the point cloud compared to treating the two problems of object and ghost classification entirely separately. This allows the vehicle with the machine learning model 200 on-board to run the classification faster and with less memory constraints.

From reading the present disclosure, other variations and modifications will be apparent to the skilled person. Such variations and modifications may involve equivalent and other features which are already known in the art of machine learning, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination. The applicant hereby gives notice that new claims may be formulated to such features and/or combinations of such features during the prosecution of the present application or of any further application derived therefrom.

For the sake of completeness, it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A computer-implemented method for classifying points in a point cloud (220) obtained by an active detection and ranging system, the method comprising:

computing a latent representation of the point cloud (220), wherein computing the latent representation comprises providing the point cloud (220) to an encoder network (201);

determining, for at least one point in the point cloud (220), a probability that the at least one point represents an object belonging to one or more object classes by providing the latent representation to an object classification network (203) that has been trained to classify points as representing an object belonging to the one or more object classes; and

determining, for the at least one point in the point cloud (220), a probability the at least one point represents a ghost object by providing the latent representation of the point cloud to a ghost classification network (205) that has been trained to classify points as representing a ghost object.

2. The computer-implemented method of claim 1, wherein the point cloud (220) comprises a time-series point cloud (620) and computing a latent representation further comprises providing an output of the encoder network to a sequence network (602).

3. The computer-implemented method of any previous claim, wherein the encoder network (201) comprises:

at least one sampling layer (301) for choosing a subset of the point cloud (220);
at least one grouping layer (303) for constructing groups of points in the point cloud according to the subset of the point cloud (220); and
at least one neural network layer (305) for down-sampling the groups of points in the point cloud (220).

4. The computer-implemented method of any previous claim, wherein the object classification network (203) and ghost classification network (205) each comprise:

at least one interpolation layer (401, 501) for up-sampling points into groups of points; and
a normalisation layer for classifying the at least one point.

5. The computer-implemented method of claim 4, wherein an input to the normalisation layer is a point cloud that has the same structure as the point cloud (220) obtained by an active detection and ranging system.

6. A computer-implemented method for training a machine learning model (200) for classifying at least one point in a point cloud (220) obtained by an active detection and ranging system, the method comprising:

a) computing a latent representation of the point cloud (220), wherein computing the latent representation comprises providing the point cloud to an encoder network (201);
b) determining, for the at least one point in the point cloud (220), a probability that the at least one point represents an object belonging to one or more object classes by providing the latent representation to an object classification network (203); and
c) determining, for the at least one point in the point cloud (220), a probability the at least one point represents a ghost object by providing the latent representation of the point cloud to a ghost classification network (205);
d) computing a first loss by comparing the probability the at least one point represents an object belonging to a specific class with a known object classification;
e) computing a second loss by comparing the probability the at least one point represents a ghost object with a known ghost classification;
f) computing a global loss by combining the first and second loss;
g) backpropagating the global loss through at least one of the encoder network (201), object classification network (203), and ghost classification network (205) to determine updated model parameters of the object classification network (203) and the ghost classification network (205).

7. The computer-implemented method of claim 6, the method further comprising:
h) repeating a) to g) using a plurality of point clouds and associated known object and ghost classifications until a predetermined criterion is met.

8. The computer-implemented method of any of claims 6 or 7, wherein the first loss is a cross-entropy loss.

9. The computer-implemented method of any of claims 6 to 8, wherein the second loss is a binary cross-entropy loss.

10. The computer-implemented method of any of claims 6 to 9, wherein the global loss is a linear combination of the first loss and the second loss.

11. A system comprising one or more processors, configured to perform the steps of:

computing a latent representation of a point cloud (220) obtained by an active detection and ranging system, wherein computing the latent representation comprises providing the point cloud to an encoder network (201); determining, for at least one point in the point cloud (220), a probability that the at least one point represents an object belonging to one or more object classes by providing the latent representation to an object classification network (203) that has been trained to classify points as representing an object belonging to the one or more object classes; and

determining, for the at least one point in the point cloud (220), a probability the at least one point represents a ghost object by providing the latent representation of the point cloud to a ghost classification network (205) that has been trained to classify points as representing a ghost object.

12. A vehicle comprising an active detection and ranging system and a system according to claim 11, wherein:

the active detection and ranging system is configured to emit and receive a signal, thereby generating a point cloud (220) of an area proximal to the vehicle; and

the system of claim 11 is further configured to receive the point cloud.

13. The vehicle of claim 12, wherein the active detection and ranging system is a radar system.

14. The vehicle of any of claims 12 to 13, wherein the vehicle further comprises an advanced driver assistance system, wherein the advanced driver assistance system receives data from the system of claim 11.

15. A non-transient machine readable medium comprising instructions for configuring one or more processors to perform the steps of:

computing a latent representation of a point cloud (220) obtained by an active detection and ranging system, wherein computing the latent representation comprises providing the point cloud to an encoder network (201); determining, for at least one point in the point cloud (220), a probability that the at least one point represents an object belonging to one or more object classes by providing the latent representation to an object classification network (203) that has been trained to classify points as representing an object belonging to the one or more object classes; and

determining, for the at least one point in the point cloud (220), a probability the at least one point represents a ghost object by providing the latent representation of the point cloud to a ghost classification network (205) that has been trained to classify points as representing a ghost object.

**Amended claims in accordance with Rule 137(2) EPC.**

1. A computer-implemented method for classifying points in a point cloud (220) obtained by an active detection and ranging system, the method comprising:

computing a latent representation of the point cloud (220), wherein computing the latent representation comprises providing the point cloud (220) to an encoder network (201); determining, for at least one point in the point cloud (220), a respective probability that the at least one point represents a real object belonging to each of one or more real object classes by providing the latent representation to a real object classification network (203) that has been trained to classify points as representing a real object belonging to the one or more real object classes; and

determining, for the at least one point in the point cloud (220), a probability the at least one point represents a ghost object by providing the latent representation of the point cloud to a ghost classification network (205) that has been trained to classify points as representing a ghost object.

2. The computer-implemented method of claim 1, wherein the point cloud (220) comprises a time-series point cloud (620) and computing a latent representation further comprises providing an output of the encoder network to a sequence network (602).

3. The computer-implemented method of any previous claim, wherein the encoder network (201) comprises:

at least one sampling layer (301) for choosing a subset of the point cloud (220);
at least one grouping layer (303) for constructing groups of points in the point cloud according to the subset of the point cloud (220); and
at least one neural network layer (305) for down-sampling the groups of points in the point cloud (220).

4. The computer-implemented method of any previous claim, wherein the rea object classification network (203) and ghost classification network (205) each comprise:

at least one interpolation layer (401, 501) for up-sampling points into groups of points; and
a normalisation layer for classifying the at least one point.

5. The computer-implemented method of claim 4, wherein an input to the normalisation layer is a point cloud that has the same structure as the point cloud (220) obtained by an active detection and ranging system.

6. Use of the computer-implemented method of any preceding claim for training a machine learning model, the method further comprising:

a) computing a first loss by comparing the probability the at least one point represents a real object belonging to a specific class with a known object classification;
b) computing a second loss by comparing the probability the at least one point represents a ghost object with a known ghost classification;
c) computing a global loss by combining the first and second loss; and
d) backpropagating the global loss through at least one of the encoder network (201), real object classification network (203), and ghost classification network (205) to determine updated model parameters of the object classification network (203) and the ghost classification network (205).

7. The use of claim 6, the method further comprising:

h) repeating the method using a plurality of point clouds and associated known real object and ghost classifications until a predetermined criterion is met.

8. The use of any of claims 6 or 7, wherein the first loss is a cross-entropy loss.

9. The use of any of claims 6 to 8, wherein the second loss is a binary cross-entropy loss.

10. The use of any of claims 6 to 9, wherein the global loss is a linear combination of the first loss and the second loss.

11. A system comprising one or more processors, configured to perform the steps of:

computing a latent representation of a point cloud (220) obtained by an active detection and ranging system, wherein computing the latent representation comprises providing the point cloud to an encoder network (201);
determining, for at least one point in the point cloud (220), a respective probability that the at least one point represents a real object belonging to each of one or more real object classes by providing the latent representation to a real object classification network (203) that has been trained to classify points as representing a real object belonging to the one or more real object classes; and
determining, for the at least one point in the point cloud (220), a probability the at least one point represents a ghost object by providing the latent representation of the point cloud to a ghost classification network (205) that has been trained to classify points as representing a ghost object.

12. A vehicle comprising an active detection and ranging system and a system according to claim **11,** wherein:

the active detection and ranging system is configured to emit and receive a signal, thereby generating a point cloud (220) of an area proximal to the vehicle; and
the system of claim **11** is further configured to receive the point cloud.

13. The vehicle of claim 12, wherein the active detection and ranging system is a radar system.

14. The vehicle of any of claims 12 to 13, wherein the vehicle further comprises an advanced driver assistance system, wherein the advanced driver assistance system receives data from the system of claim 11.

15. A non-transient machine readable medium comprising instructions for configuring one or more processors to perform the steps of:

computing a latent representation of a point cloud (220) obtained by an active detection and ranging system, wherein computing the latent representation comprises providing the point cloud to an encoder network (201); determining, for at least one point in the point cloud (220), a respective probability that the at least one point represents a real object belonging to each of one or more real object classes by providing the latent representation to an real object classification network (203) that has been trained to classify points as representing an object belonging to the one or more real object classes; and
determining, for the at least one point in the point cloud (220), a probability the at least one point represents a ghost object by providing the latent representation of the point cloud to a ghost classification network (205) that has been trained to classify points as representing a ghost object.

**FIGURE 1**

200

220

Encoder 201

Object Classification
Network 203

Ghost Classification
Network 205

Object Output 210

Ghost Output 212

**FIGURE 2**

201

Sampling Layer 301

Grouping Layer 303

Neural Network Layer 305

**FIGURE 3**

203

Interpolation Layer 401

Fully Connected Network Layer 403

Object Softmax Layer 405

**FIGURE 4**

205

Interpolation Layer 501

Fully Connected Network Layer 503

Ghost Softmax Layer 505

# FIGURE 5

600

620

Encoder 201

Sequence Network 602

Object Classification Network 203

Ghost Classification Network 205

Object Output 210

Ghost Output 212

**FIGURE 6**

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 24 18 4752

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG LEICHEN ET AL: "Radar Ghost Target Detection via Multimodal Transformers", IEEE ROBOTICS AND AUTOMATION LETTERS, IEEE, [Online] vol. 6, no. 4, 27 July 2021 (2021-07-27), pages 7758-7765, XP011872814, DOI: 10.1109/LRA.2021.3100176 [retrieved on 2021-08-18] * the whole document * | 1-5, 11-15 | INV. G06F16/906 G06N3/045 G06N3/048 G06N3/084 G06N3/09 |
| X | & LI CHARLES R ET AL: "PointNet++: Deep Hierarchical Feature Learning on Point Sets in a Metric Space", ADVANCES IN NEURAL INFORMATION PROCESSING SYSTEMS 30 (NIPS 2017), 4 December 2017 (2017-12-04), XP093251917, Retrieved from the Internet: URL:https://proceedings.neurips.cc/paper_files/paper/2017/file/d8bf84be3800d12f74d8b05e9b89836f-Paper.pdf> [retrieved on 2025-02-19] * the whole document * | 1-5, 11-15 | |

-----

**TECHNICAL FIELDS SEARCHED (IPC)**

G06N
G06F

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| The Hague | 19 February 2025 | Ntarlagiannis, V |

EPO FORM 1503 03.82 (P04E07)

Europäisches
Patentamt

European
Patent Office

Office européen
des brevets

**INCOMPLETE SEARCH
SHEET C**

Application Number

EP 24 18 4752

Claim(s) completely searchable:
        1-5, 11-15

Claim(s) not searched:
        6-10

Reason for the limitation of the search:

Rule 62a(1) EPC
The present set of claims 1-15 contains two independent method claims
(i.e. claims 1, 6).
Under Article 84 in combination with Rule 43(2) EPC, an application may
contain more than one independent claim in a particular category only if
the subject-matter claimed falls within one or more of the exceptional
situations set out in paragraph (a), (b) or (c) of Rule 43(2) EPC, which
is not the case in the present application.
Independent method claims 1, 6 relate neither to inter-related products -
exception (a) (in the sense of plug-and-socket), nor to different uses of
a product or apparatus - exception (b) (no use is claimed) (see
Guidelines F-IV 3.2 and 3.3).
Regarding exception (c) it is noted that claims 1, 6 do not relate to an
exceptional case of "alternative" solutions in the sense of mutually
exclusive possibilities, since claim 1 directs to classifying points,
while claim 6 directs to training a machine learning model. Therefore,
claims 1, 6 cannot be considered as alternative solutions. Moreover, it
is noted that claims 1, 6 do not relate to an exceptional case of
"alternative" solutions in the sense of mutually exclusive possibilities
in consideration of the significant overlapping of the subject-matter
(see T56/01 r.4.3). Therefore, claims 1, 6 cannot be considered as
alternative solutions.
Since the applicant did not respond to the invitation under Rule 62a(1)
EPC, a partial search report based on claims 1-5 and 11-15, as filed on
26-06-2024, has been conducted (Rule 62a(1) EPC).